# EUROPÄISCHE PATENTSCHRIFT

(11) **EP 1 475 543 B1**
(45) Veröffentlichungstag und Bekanntmachung des Hinweises auf die Patenterteilung: **17.05.2006**
(21) Anmeldenummer: 04008277.8
(22) Anmeldetag: 06.04.2004
(51) Int. Cl.: F15B 15/12

(54) **Schwenkmotor**
Vane actuator
Vérin rotatif

(30) Priorität: 08.05.2003 DE 10320456
(43) Veröffentlichungstag der Anmeldung: 10.11.2004
(73) Patentinhaber: Hense Systemtechnik GmbH & Co. KG, 44807 Bochum (DE)
(72) Erfinder: Winzen, Rolf, 44805 Bochum (DE); Hense, Frank, 45549 Sprockhövel (DE)
(74) Vertreter: Dörner, Lothar

(56) Entgegenhaltungen:
- WO-A-20/04054826
- DE-A- 3 730 045
- DE-A- 19 754 539
- DE-B- 1 179 124
- DE-C- 19 742 882

## Beschreibung

Die Erfindung betrifft einen Schwenkmotor, vorzugsweise hydraulisch betrieben, der die Merkmale des Oberbegriffs des Patentanspruchs 1 aufweist.

Schwenkmotore werden in unterschiedlichsten Bereichen der Antriebstechnik eingesetzt. Die nach dem Drehflügelprinzip arbeitenden Motoren setzen den Betriebsdruck eines Druckmediums, wie zum Beispiel Hydrauliköl, direkt und spielfrei in ein Drehmoment bzw. eine Drehbewegung um.

Ein Schwenkmotor mit den Merkmalen des Oberbegriffs des Anspruchs 1 ist aus DE 197 42 882 C1 bekannt: Der bekannte Schwenkmotor weist ein mit Deckeln versehenes Gehäuse, einen Rotor mit einer in den Deckeln gelagerten Antriebswelle und ein Steuerungssystem auf. In dem Gehäuse ist mindestens eine Rippe (Stator) angeordnet. Die Antriebswelle ist mit Rotorflügeln in gleicher Anzahl wie die Rippen versehen. Die Rippen und Rotorflügel in Verbindung mit dem Gehäuse, der Antriebswelle und den Deckeln bilden Arbeitsräume. Das Steuerungssystem umfasst Druckleitungen (Kanäle), Steuerventile und/oder Reversierpumpen. Über das Steuerungssystem erfolgt eine kontrollierte Zu- und Abführung des Druckmediums. Der Rotorflügel ist innerhalb seines Freiraumes im Gehäuse nur begrenzt schwenkbar und bildet so mit dem Statorflügel des Gehäuses mindestens eine Druck- und eine Ablaufkammer aus. Zur Gewährleistung der inneren Dichtheit zwischen der Druck- und der Ablaufkammer sind der Stator- und der Rotorflügel gegenüber den seitlichen Deckeln und gegenüber der radialen Gehäusewand bzw. der Abtriebswelle mit einem formangepassten Gleichdichtelement ausgerüstet. Die Abdichtung kann auch nur über metallische Spalte erfolgen. Vergleichbare Schwenkmotoren sind noch aus DE 11 79 124 B und aus der im Prioritätsintervall veröffentlichten WO 2004/054823 A1 bekannt.

Den bekannten Schwenkmotoren gemein ist, dass sie ein erhebliches Bauvolumen des Systems Schwenkmotor/Hydraulikkomponenten aufweisen. Um dieses Bauvolumen zu reduzieren, ist es bekannt, einmal Steuerventile, vgl. DE 1 426 579 A, zum anderen Reversierpumpen innerhalb der Antriebswelle anzuordnen, vgl. DE 100 26 147 A1.

Der Erfindung liegt die Aufgabe zugrunde, einen Schwenkmotor zu schaffen, bei dem das Bauvolumen des Systems Schwenkmotor/Hydraulikkomponente weiter verringert wird. Gemäß der Erfindung wird diese Aufgabe dadurch gelöst, dass die Antriebswelle mindestens eine Stufen-Sackbohrung zur Aufnahme von Steuer- und Regelkomponenten aufweist, von welcher mindestens ein Verbindungskanal in die Arbeitsräume abzweigt, und dass die Steuerventile und/oder die Reversierpumpe innerhalb der Antriebswelle angeordnet sind.

Mit der Erfindung ist ein Schwenkmotor geschaffen, bei dem das Bauvolumen des Systems Schwenkmotor/Hydraulikkomponenten deutlich verringert ist. Die aus DE 197 54 539 A1 bekannte Maßnahme, - nur - das Schaltventil zur Stabilitätskontrolle in dem Hohlraum der Motorwelle unterzubringen wird bei der Erfindung konsequent auf alle, jedenfalls auf die wesentlichen Steuer- und Regelkomponenten, ausgedehnt, über die das kontrollierte Zu- und Abführen des Druckmediums erfolgt. Durch die Möglichkeit der Integration von Bauteilen in die Stufen-Sackbohrung der Antriebswelle lässt sich externes Bauvolumen reduzieren. Gleichzeitig wird die Welle nur unwesentlich bezüglich des übertragbaren Drehmoments geschwächt.

Dadurch, dass die Steuerventile des Systems innerhalb der Antriebswelle angeordnet sind, wird das Ansprechverhalten von Druckventilen, die zur Überdruckabsicherung des Schwenkmotors dienen, zeitlich verkürzt. Aufgrund der kurzen internen Längen der Verbindungskanäle erreicht eine Druckwelle schneller das Druckventil und muss sich nicht durch Rohrleitungen und Schläuche fortpflanzen, was ein verzögertes Ansprechverhalten zur Folge hat und zu schädlichen Druckspitzen im Schwenkmotor führen kann. Weiterhin wird durch die Integration der Hydraulikkomponenten eine Erhöhung der hydraulischen Steifigkeit erzielt. Das eingeschlossene Volumen des Druckmediums, bestehend aus dem Volumen der Arbeitsräume des Schwenkmotors (Schluckvolumen) und dem Volumen der Verbindungskanäle bis zur Komponente (Totvolumen), ist reduziert. Durch die daraus resultierende verringerte Kompressibilität wird die Steifigkeit des Systems erhöht, was sich positiv auf das Regelungsverhalten des Systems auswirkt.

Darüber hinaus führt die Integration der Steuerventile in die Welle zu einer Optimierung des thermischen Systemverhaltens. Durch das verringerte Totvolumen zu einer Komponente, zum Beispiel einem Wegeventil oder Servoventil, wird der Austausch des Druckmediums der Arbeitsräume (Schluckvolumen) gegen das Druckmedium des Tankvolumens des Versorgungsaggregats optimiert. Gerade bei kleinen Arbeitsschwenkwinkeln und großem Totvolumen, dass heißt langen Leitungen von den Arbeitsräumen bis zum Wegeventil, erwärmt sich das Druckmedium im Schwenkmotor stark, da es aufgrund der pendelnden Ölsäulen in den Leitungen nicht gegen kühleres Druckmedium aus dem Tank des Versorgungsaggregats getauscht wird. Die interne Anordnung ermöglicht ein größtmögliches Austauschvolumen.

In weiterer Ausbildung der Erfindung sind sowohl die Steuerventile als auch die Reversierpumpe innerhalb der Antriebswelle angeordnet, wobei an das bohrungsseitige Wellenende ein Elektromotor angeordnet ist, der die Reversierpumpe antreibt. Durch die Integration sowohl der Steuerventile als auch der Reversierpumpe in die Antriebswelle des Schwenkmotors sowie der Adaption eines Elektromotors am Schwenkmotor entfällt das komplette Versorgungsaggregat inklusive der Verrohrung, was zu einer deutlichen Reduzierung der Komponentenanzahl führt. Es wird kein separater Medienbehälter mehr benötigt, da die Summe der Volumina der Arbeitsräume bei einer Schwenkbewegung konstant bleibt und somit der Schwenkmotor zugleich den Medienbehälter darstellt. Weiter entfällt ein zur Schwenkrichtungsumkehr benötigtes Wegeventil, da die Richtungsumkehr über die integrierte Reversierpumpe mittels Drehrichtungsänderung des E-Motors vorgenommen wird.

In Weiterbildung der Erfindung ist ein Ausgleichsbehälter in die Welle integriert. Dieser dient dem Ausgleich von geringeren Leckagen sowie temperatur- und druckbedingten Volumenänderungen.

In weiterer Ausgestaltung der Erfindung sind zwischen den Arbeitsräumen und dem Ausgleichsbehälter entsperrbare Rückschlagventile angeordnet. Hierdurch wird ein kontrollierter Ein- und Austritt des Differenzvolumens zwischen den Arbeitsräumen und dem Ausgleichsbehälter ermöglicht.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1a: einen Schwenkmotor mit Stufen-Sackbohrung in der Welle im Längsschnitt;
- Figur 1b: den Schwenkmotor aus Figur 1a im Querschnitt;
- Figur 2a: einen Schwenkmotor mit integriertem Doppel-Druckbegrenzungsventil im Längsschnitt;
- Figur 2b: den Schwenkmotor aus Figur 2a im Querschnitt;
- Figur 3a: einen Schwenkmotor mit integriertem 4/3-Wegeventil im Längsschnitt;
- Figur 3b: den Schwenkmotor aus Figur 3a im Querschnitt;
- Figur 4a: einen Schwenkmotor mit integriertem 4/3-Wegeventil und Drehdurchführung im Längsschnitt;
- Figur 4b: den Schwenkmotor aus Figur 4a im Querschnitt;
- Figur 5a: einen Schwenkmotor mit integrierter Reversierpumpe im Längsschnitt und entsperrbaren Rückschlagventilen;
- Figur 5b: den Schwenkmotor aus Figur 5a im Querschnitt.

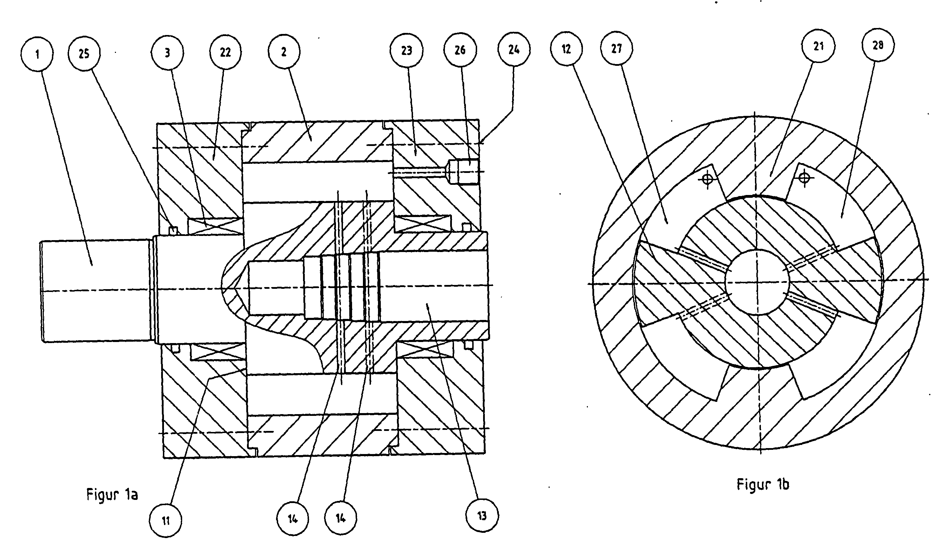

Der als Ausführungsbeispiel gewählte hydraulische Schwenkmotor gemäß Figuren 1a und 1b weist eine Welle 1 und ein Gehäuse 2 auf. Das Gehäuse 2 ist an den Stirnseiten durch Gehäusedeckel 22, 23 verschlossen. Eine Deckelverschraubung 24, mit deren Hilfe die Gehäusedeckel 22, 23 an dem Gehäuse 2 befestigt sind, ist angedeutet.

Mit Hilfe von Lagern 3, die in den Gehäusedeckeln 22, 23 angeordnet sind, ist die Welle 1 in dem Gehäuse 2 drehbar gelagert. Die Welle 1 ist abgesetzt ausgeführt. Sie weist im Innern des Gehäuses 2 einen Bund 11 auf. Die Stirnseiten des Bundes 11 gleiten an den Gehäusedeckeln 22, 23. Zur Abdichtung der Welle 1 gegenüber den Gehäusedeckeln 22, 23 sind in diesen Dichtungsnuten 25 zur Aufnahme von Dichtungsringen vorgesehen. An die Welle 1 ist ein Flügel 12 angeformt, der bis zum Gehäuse 2 radial nach außen reicht.

An das Gehäuse 2 ist eine nach innen bis zu dem Bund 11 reichende Rippe 21 angeformt. In den Gehäusedeckel 23 sind Druckanschlüsse 26 für die Zu- und Abführung des Druckmediums in die bzw. aus Arbeitsräumen 27, 28 eingebracht, die zwischen den Flügeln 12 und den Rippen 21 gebildet sind. Rotationssymmetrisch zur Wellenachse ist in die Welle 2 eine Stufen-Sackbohrung 13 eingebracht, von der Verbindungskanäle 14 in die Arbeitsräume 27, 28 verlaufen.

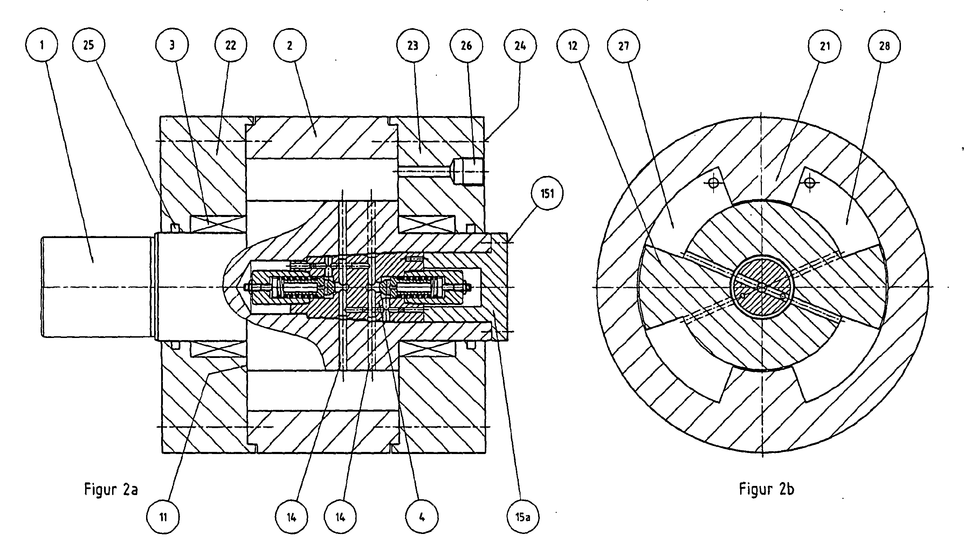

Im Ausführungsbeispiel nach den Figuren 2a und 2b ist in der Stufen-Sackbohrung 13 ein Doppel-Druckbegrenzungsventil 4 angeordnet, das an die Verbindungskanäle 14 angeschlossen ist. Die Stufen-Sackbohrung 13 ist mit einem Abschlussdeckel 15a verschlossen, der als Hohlzylinder mit Anschlussflansch ausgeführt ist. Über den Flansch mit einer angedeuteten Deckelverschraubung 151 ist der Abschlussdeckel 15a mit der Welle 1 verbunden.

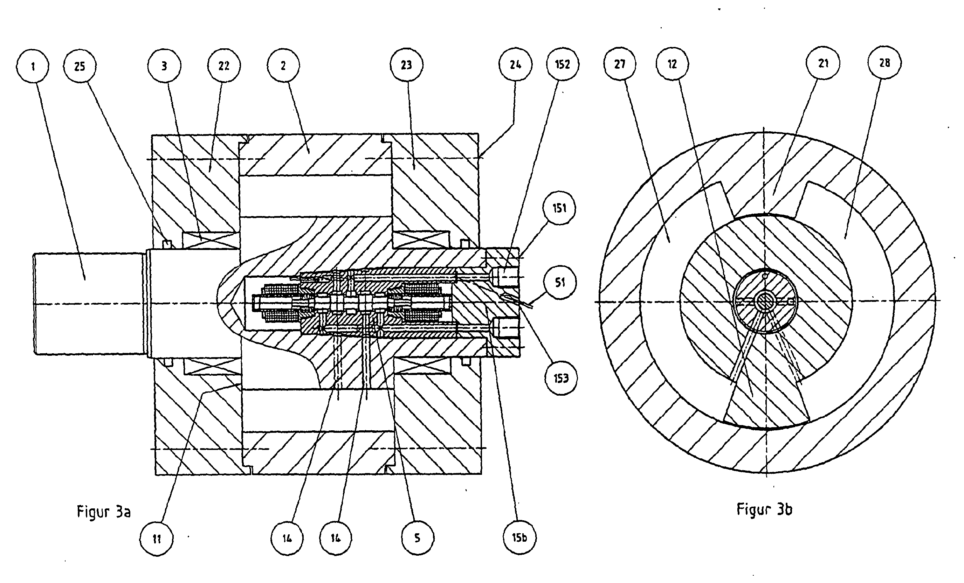

Im Ausführungsbeispiel nach den Figuren 3a und 3b sind die Anschlüsse für die Zu- und Abführung des Druckmediums als Druckanschlüsse 152 in den Abschlussdeckel 15b integriert. Der Abschlussdeckel 15b weist ferner eine Durchführung 153 für eine elektrische Versorgungsleitung 51 auf. Diese versorgt ein 4/3-Wegeventil 5, welches in der Stufen-Sackbohrung 13 der Welle 1 angeordnet und an die Verbindungskanäle 14 sowie die Druckanschlüsse 152 angeschlossen ist.

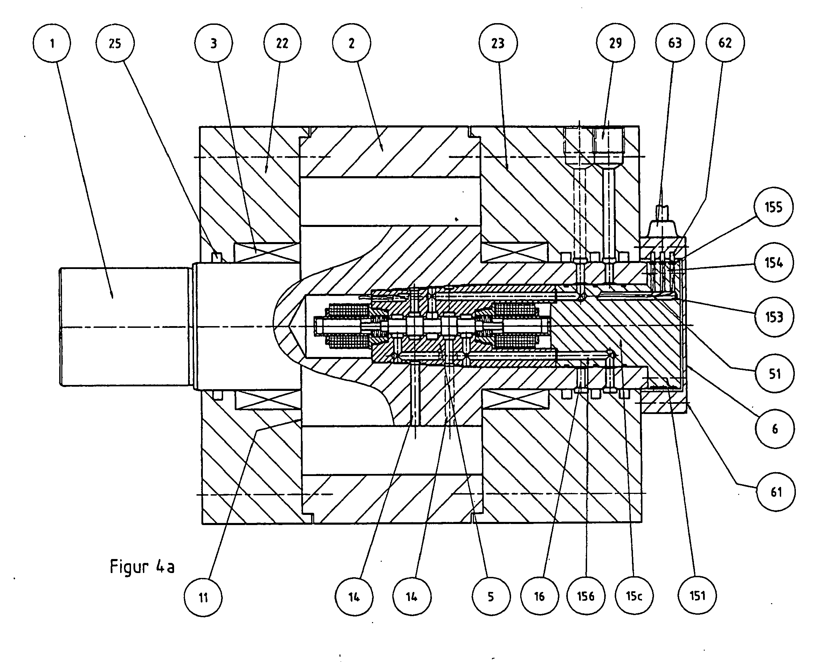

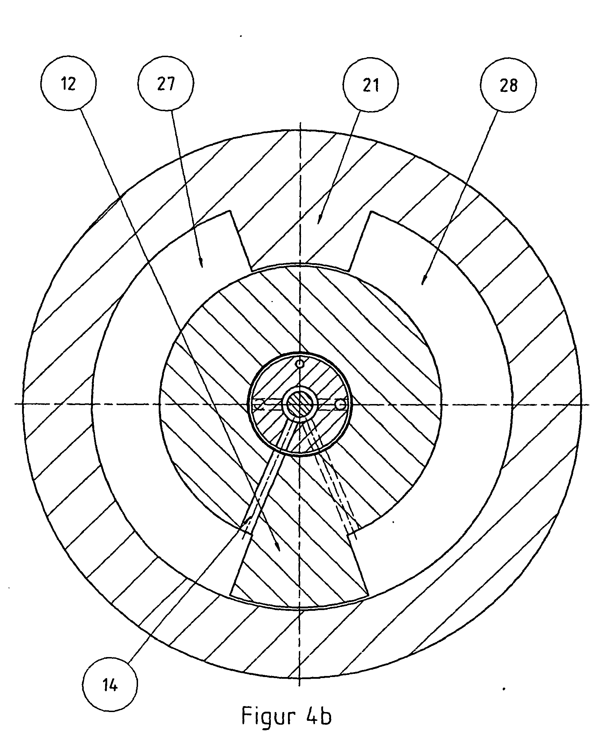

Im Ausführungsbeispiel nach Figuren 4a und 4b erfolgt die elektrische Versorgung des 4/3-Wegeventils 5 über eine in den Anschlussdeckel 15c, der als mit Flansch versehener Vollzylinder ausgeführt ist, eingebrachte mehrpfadige Drehdurchführung 154. Letzter durchdringt den Anschlussdeckel 15c flanschseitig orthogonal zur Wellenachse. Durch die Drehdurchführung 154 verlaufen die Versorgungsleitungen 51, die am flanschartigen Rand des Abschlussdeckels 15c in Schleifkontakte 155 übergehen. Die Schleifkontakte 155 stehen mit Kontakten 62 einer Verschlusskappe 6 in Berührung, welche an eine elektrische Versorgungsleitung 63 angeschlossen sind, die randseitig durch die Verschlusskappe 6 geführt ist. Die Verschlusskappe 6 umschließt das flanschartige Ende des Abschlussdeckels 15c der Welle 1 und ist über eine angedeutete Verschraubung 61 mit dem Gehäusedeckel 23 verbunden.

Die Zu- und Abführung des Druckmediums erfolgt über orthogonal zur Wellenachse in den Gehäusedeckel 23 eingebrachte Druckanschlüsse 29, welche den Deckel 23 bis zur Welle 1 durchdringen. Die Druckanschlüsse 29 münden in Versorgungskanäle 16, welche auf der Welle 1 umlaufend angeordnet sind, und über Bohrungen mit in den Abschlussdeckel 15c eingebrachten Kanälen 156 verbunden sind, an denen wiederum das 4/3-Wegeventil 5 angeschlossen ist.

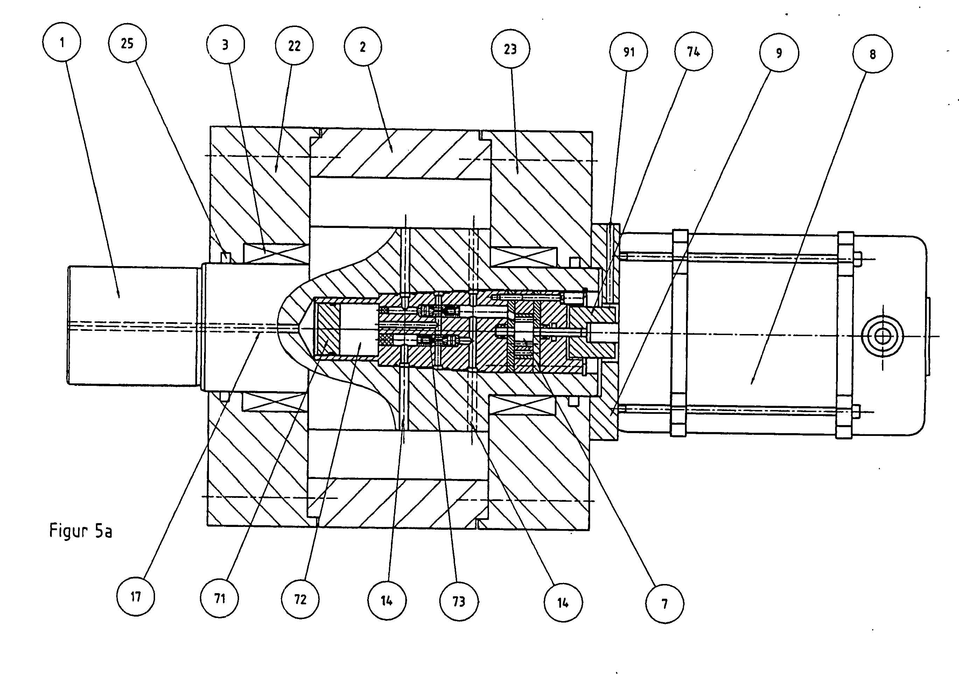

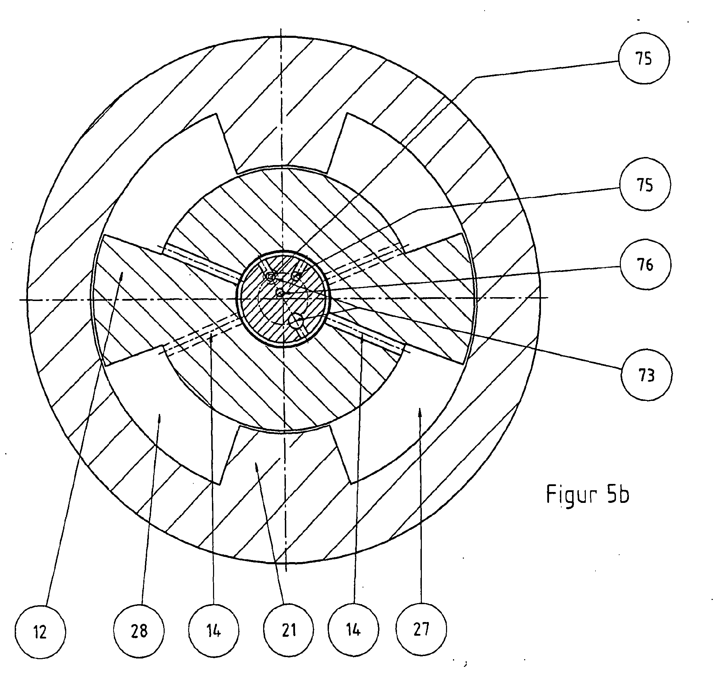

Im Ausführungsbeispiel nach den Figuren 5a und 5b ist in der Stufen-Sackbohrung 13 der Welle 1 eine Reversierpumpe 7 angeordnet, die über eine Kupplung 74 durch einen Elektromotor 8 angetrieben wird. Der Elektromotor 8 ist an einer Laterne 9 befestigt, welche wiederum die Welle 1 umschließend mit dem Deckel 23 des Gehäuses 2 verbunden ist. In der Laterne 9 ist orthogonal zur Wellenachse ein "Lüftungskanal" 91 eingebracht, der zum Anziehen der Befestigungsschrauben der Kupplung 74 dient. An der dem Elektromotor 8 entgegengerichteten Seite ist die Reservierpumpe 7 über Verbindungskanäle 75, 76 sowie entsperrbare Rückschlagventile 73 mit einem Ausgleichsbehälter 72 verbunden, in dem ein Kolben 71 angeordnet ist. Die die Rückschlagventile 73 begrenzenden Verbindungskanäle 75, 76 sind über die Verbindungskanäle 14 mit den Arbeitsräumen 27 und 28 verbunden. Zur Entlüftung der Anordnung ist entlang der Mittelachse der Welle 1 ein Entlüftungskanal 17 von der Stufen-Sackbohrung 13 bis zu dem Elektromotor 8 gegenüberliegenden Ende der Welle 1 vorgesehen.

Der Schwenkmotor weist keinen hydraulischen Druckanschluss aus, da dieser selbst zugleich den Medienbehälter darstellt. Eine Versorgung des Schwenkmotors mit Druckmedium von außen erübrigt sich, da die Summe der Volumina der Arbeitsräumen 27, 28 bei einer Schwenkbewegung konstant bleibt.

## Patentansprüche

1. Schwenkmotor, vorzugsweise hydraulisch betrieben, der ein mit Deckeln (22, 23) versehenes Gehäuse (2), in dem ein Stator mit mindestens einer Rippe (21) angeordnet ist, einen Rotor mit einer in den Deckeln gelagerten Antriebswelle (1), die abschnittsweise hohl ausgeführt und mit Rotorflügeln (12) in gleicher Anzahl wie die Rippen (21) versehen ist, wobei die Rippen (21) und Rotorflügel (12) in Verbindung mit dem Gehäuse (2), der Antriebswelle (1) und den Deckeln (22, 23) Arbeitsräume bilden, und der ein Steuerungssystem aus Druckleitungen, Steuerventilen und Reversierpumpe (7) aufweist, über das eine kontrollierte Zu- und Abführung eines Druckmediums erfolgt, wobei die Antriebswelle (1) mindestens eine Stufen-Sackbohrung (13) zur Aufnahme von Steuer- und Regelkomponenten aufweist, von welcher mindestens ein Verbindungskanal (14) in die Arbeitsräume (27, 28) abzweigt, **dadurch gekennzeichnet, dass** die Steuerventile und/oder die Reversierpumpe (7) innerhalb der Antriebswelle (1) angeordnet sind.

2. Schwenkmotor nach Anspruch 1, **dadurch gekennzeichnet, dass** sowohl die Steuerventile als auch die Reversierpumpe (7) innerhalb der Antriebswelle (1) angeordnet sind.

3. Schwenkmotor nach Anspruch 1 oder 2, **dadurch gekennzeichnet, dass** die Antriebswelle (1) bohrungsseitig mit einem Abschlussdeckel (15) verschlossen ist, der Druck- (152) und/oder elektrische Anschlüsse (153, 154) aufweist, und über den die Versorgung mit Druckmedium und/oder elektrischer Energie erfolgt.

4. Schwenkmotor nach Anspruch 2 oder 3, **dadurch gekennzeichnet, dass** die Stufen-Sackbohrung (13) mit einem Entlüftungskanal (17) versehen ist.

5. Schwenkmotor nach einem der Ansprüche 1 bis 4, **dadurch gekennzeichnet, dass** an das bohrungsseitige Ende der Welle (1) ein Elektromotor (8) angeordnet ist, der die Reversierpumpe (7) antreibt.

6. Schwenkmotor nach einem der Ansprüche 1 bis 5, **dadurch gekennzeichnet, dass** in der Stufen-Sackbohrung (13) der Welle (1) ein Ausgleichsbehälter (72) angeordnet ist.

7. Schwenkmotor nach Anspruch 6, **dadurch gekennzeichnet, dass** zwischen den Arbeitsräumen (27, 28) und dem Ausgleichsbehälter (72) entsperrbare Rückschlagventile (73) angeordnet sind.

8. Schwenkmotor nach einem der Ansprüche 1 bis 7, **dadurch gekennzeichnet, dass** radial in der Welle (1) ein Druckbegrenzungsventil (4) angeordnet ist.

9. Schwenkmotor nach Anspruch 8, **dadurch gekennzeichnet, dass** das Druckbegrenzungsventil (4) in einem der Gehäusedeckel (22, 23) angeordnet ist.

10. Schwenkmotor nach einem der Ansprüche 1 bis 9, **dadurch gekennzeichnet, dass** in der Welle (1) eine Drehdurchführung (154) angeordnet ist und die elektrische Versorgung von in der Antriebswelle (1) integrierten Bauteilen über Schleifkontakte (155) erfolgt, die in einem die Stufen-Sackbohrung (13) verschließenden Abschlussdeckel (15) angeordnet sind.

11. Schwenkmotor nach einem der Ansprüche 1 bis 10, **dadurch gekennzeichnet, dass** bohrungsseitig in die Welle (1) Versorgungsnuten (16) eingebracht sind, die mit in dem Gehäusedeckel (23) eingebrachten Druckanschlüsse (29) korrespondieren.

## Claims

1. Vane actuator, preferably hydraulically driven, which has a housing (2) fitted with covers (22, 23), in which a stator with at least one rib (21) is located, a rotor with a drive shaft (1) running on bearings in the covers, which is hollow in parts and fitted with rotor blades (12) equal in number to the ribs (21), where the ribs (21) and rotor blades (12) in combination with the housing (2), the drive shaft (1) and the covers (22, 23), form working spaces, and which has a control system consisting of pressure pipes, control valves and a reversing pump (7), by means of which a controlled inward and outward flow of a pressure medium takes place, where the drive shaft (1) has at least one graded blind bore (13) to receive control and regulating components, from which at least one connecting channel (14) branches off into the working spaces (27, 28), **characterised in that** the control valves and/or the reversing pump (7) are located within the drive shaft (1).

2. Vane actuator according to claim no. 1, **characterised in that** both the control valves and the reversing pump (7) are located within the drive shaft (1).

3. Vane actuator according to claim no. 1 or 2, **characterised in that** the drive shaft (1) is closed with a cover (15) on the bore side, which has pressure (152) and/or electrical connections (153, 154) and through which the pressure medium and/or electric power is supplied.

4. Vane actuator according to claim no. 2 or 3, **characterised in that** the graded blind hole (13) is fitted with a venting channel (17).

5. Vane actuator according to one of the claims 1 to 4, **characterised in that** an electric motor (8) is located at the end of the shaft (1) on the bore side, which drives the reversing pump (7).

6. Vane actuator according to one of the claims 1 to 5, **characterised in that** an equalising reservoir (72) is located in the graded blind hole (13) of the shaft (1).

7. Vane actuator according to claim no. 6, **characterised in that** releasable return valves (73) are located between the working spaces (27, 28) and the equalising reservoir (72).

8. Vane actuator according to one of the claims 1 to 7, **characterised in that** a pressure-control valve (4) is located radially in the shaft (1).

9. Vane actuator according to claim no. 8, **characterised in that** the pressure-control valve (4) is located in one of the housing covers (22, 23).

10. Vane actuator according to one of the claims 1 to 9, **characterised in that** a rotary transmission leadthrough (154) is located in the shaft (1) and the electricity is supplied from the components located in the drive shaft (1) via sliding contacts (155) which are located in one of the closing covers (15) closing the graded blind hole (13).

11. Vane actuator according to one of the claims 1 to 10, **characterised in that** supply grooves (16) are arranged in the bore side of the shaft (1) which correspond to the pressure connections (29) arranged in the housing cover (23).

## Revendications

1. Vérin rotatif, à entraînement de préférence hydraulique, présentant un carter (2) doté de couvercles (22, 23) dans lequel est disposé un stator équipé d'au moins une nervure (21), et présentant un rotor avec un arbre d'entraînement (1) en appui dans les couvercle, arbre dont certains segments ont été exécutés creux, et avec des ailettes (12) de rotor en nombre égal aux nervures (21), les nervures (21) et les ailettes (12) de rotor formant, en association avec le carter (2), l'arbre d'entraînement (1) et les couvercles (22, 23), des cavités opérationnelles, ledit vérin présentant un système de commande composé de conduites sous pression, de vannes de commande et d'une pompe réversible (7) via lequel ont lieu l'apport et l'évacuation contrôlés d'un fluide sous pression, l'arbre d'entraînement (1) présentant au moins un alésage borgne à gradins (13) destiné à recevoir les composants de commande et de régulation, alésage depuis lequel au moins un canal de liaison (14) bifurque vers les cavités opérationnelles (27, 28), **caractérisé en ce que** les vannes de commande et/ou la pompe réversible (7) sont disposées à l'intérieur de l'arbre d'entraînement (1).

2. Vérin rotatif selon la revendication 1, **caractérisé en ce que** aussi bien les vannes de commande que la pompe réversible (7) sont disposées à l'intérieur de l'arbre d'entraînement (1).

3. Vérin rotatif selon la revendication 1 ou 2, **caractérisé en ce que** l'arbre d'entraînement (1) est obturé, côté alésage, par un couvercle terminal (15) présentant des raccords sous pression (152) et/ou électriques (153, 154), et via lequel a lieu l'alimentation en fluide sous pression et/ou en énergie électrique.

4. Vérin rotatif selon la revendication 2 ou 3, **caractérisé en ce que** l'alésage borgne à gradins (13) est doté d'un canal de dégazage (17).

5. Vérin rotatif selon l'une des revendications 1 à 4, **caractérisé en ce qu'**un moteur électrique (8) est disposé contre l'extrémité d'arbre (1) située du côté de l'alésage, ledit moteur entraînant la pompe réversible (7).

6. Vérin rotatif selon l'une des revendications 1 à 5, **caractérisé en ce que** dans l'alésage borgne à gradins (13) de l'arbre (1) est disposé un réservoir de compensation (72).

7. Vérin rotatif selon la revendication 6, **caractérisé en ce qu'**entre les cavités opérationnelles (27, 28) et le réservoir de compensation (72) sont disposées des vannes à clapet anti-retour (73) déverrouillables.

8. Vérin rotatif selon l'une des revendications 1 à 7, **caractérisé en ce qu'**une vanne (4) limitatrice de pression est disposée de façon radiale dans l'arbre (1).

9. Vérin rotatif selon la revendication 8, **caractérisé en ce que** la vanne (4) limitatrice de pression est disposée dans l'un des couvercles de carter (22, 23).

10. Vérin rotatif selon l'une des revendications 1 à 9, **caractérisé en ce qu'**un passage tournant (154) est disposé dans l'arbre (1) et **en ce que** l'alimentation électrique des composants intégrés dans l'arbre d'entraînement (1) a lieu par le biais de contacts à frottement (155) qui sont disposés dans un couvercle terminal (115) obturant le trou borgne à gradins (13).

11. Vérin rotatif selon l'une des revendications 1 à 10, **caractérisé en ce que** du côté de l'alésage, des rainures d'alimentation (16) ont été usinées dans l'arbre (1), lesquelles coïncident avec les raccords sous pression (29) ménagés dans le couvercle (23) du carter.
